# EUROPÄISCHE PATENTANMELDUNG

(11) **EP 1 604 847 A1**
(43) Veröffentlichungstag der Anmeldung: **14.12.2005**
(21) Anmeldenummer: 04291442.4
(22) Anmeldetag: 09.06.2004
(51) Int. Cl.: B60H 1/00

(54) **Klimaanlage für ein Kraftfahrzeug**

(71) Anmelder: Behr France Rouffach SAS, 68250 Rouffach (FR)
(72) Erfinder: Peter, Vincent, 68190 Ensisheim (FR)
(74) Vertreter: Grauel, Andreas

(57) **Zusammenfassung**

Die Erfindung betrifft eine Klimaanlage (1), für ein Kraftfahrzeug, mit einem Luftkanal-System (2), das eine Mehrzahl von Luftkanälen (4) aufweist, wobei mindestens ein Zusatz-Gebläse (5) für den Fondbereich vorgesehen ist.

## Beschreibung

Die Erfindung betrifft eine Klimaanlage, insbesondere für ein Kraftfahrzeug, gemäß dem Oberbegriff des Anspruchs 1.

Bei bekannten Klimaanlagen für ein Kraftfahrzeug sind in der Regel Luftkanäle aus Kunststoff vorgesehen, welche die temperierte Luft von der Klimaanlage zum Fahrzeuginnenraum führen. Bei größeren Kraftfahrzeugen sind hierbei häufig zwei Klimaanlagen vorgesehen, um eine ausreichende Temperierung zu erreichen. Dabei erhöht die zweite Klimaanlage die Kosten deutlich.

Es ist Aufgabe der Erfindung, eine verbesserte Klimaanlage zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage vorgesehen, die mindestens ein Booster-Gebläse umfasst, welches das Klimaanlagen-Gebläse unterstützt und die Luft insbesondere dem Fondbereich zuführt, wodurch die Verweildauer der Luft in den entsprechenden Luftkanälen verringert wird, so dass eine geringere Temperaturänderung erfolgt.

Auf Grund der verringerten Temperaturänderung ist auch für größere Fahrzeuge nur eine Klimaanlage nötig, so dass auf die zweite Klimaanlage, bei der es sich üblicherweise um eine Heckanlage handelt, verzichtet werden kann, da insbesondere der Fondbereich mit ausreichend temperierter Luft versorgt werden kann.

Bevorzugt sind die Luftkanäle ihres Luftkanal-Systems isolierend ausgebildet oder mit einer Isolierung versehen sind, so dass die Temperaturänderung in Folge der Umgebungstemperatur, insbesondere ein Temperaturanstieg von gekühlter Luft, minimiert und dadurch die Funktion der Klimaanlage verbessert werden kann.

In Luftströmungsrichtung gesehen vor einem Booster-Gebläse ist vorzugsweise ein Mischsystem zur Mischung von kalter und warmer Luft vorgesehen, so dass in den Luftkanälen nach dem Booster-Gebläse keine Mischung der temperierten Luft mehr erfolgt.

Im Folgenden wird die Erfindung anhand eines Ausführungsbeispiels mit Abwandlung unter Bezugnahme auf die Zeichnung im Einzelnen erläutert. In der Zeichnung zeigen:
- Fig. 1: eine schematische Darstellung eines Luftkanalverlaufs einer Klimaanlage in einem Kraftfahrzeug gemäß dem Ausführungsbeispiel,
- Fig. 2: eine schematische Darstellung einer Variante von Fig. 1,
- Fig. 3: eine schematische Darstellung einer ersten Mischvorrichtung, und
- Fig. 4: eine schematische Darstellung einer zweiten Mischvorrichtung.

Eine erfindungsgemäße Klimaanlage 1 weist ein Luftkanal-System 2 zur Leitung der Luft von dem temperierenden Teil der Klimaanlage 1 zu den einzelnen Luft-Ausströmdüsen 3 in den Fahrzeuginnenraum auf. Hierbei sind die Luftkanäle 4 des Luftkanal-Systems 2, welche die kalte Luft insbesondere in den Fondbereich des Kraftfahrzeugs führen, isoliert ausgebildet, so dass der Temperaturanstieg bzw. -verlust minimiert werden kann. Die isolierten Luftkanäle 4 sind in den Figuren jeweils durch dickere Striche dargestellt, jedoch können auch alle Luftkanäle isoliert sein.

Vorliegend sind die Luftkanäle 4 mit einer nachträglich angebrachten Isolierung (nicht dargestellt) versehen, jedoch können auch Luftkanäle verwendet werden, die auf Grund ihrer Ausgestaltung, bspw. auf Grund der Verwendung eines Verbundwerkstoffs, isolierend wirken.

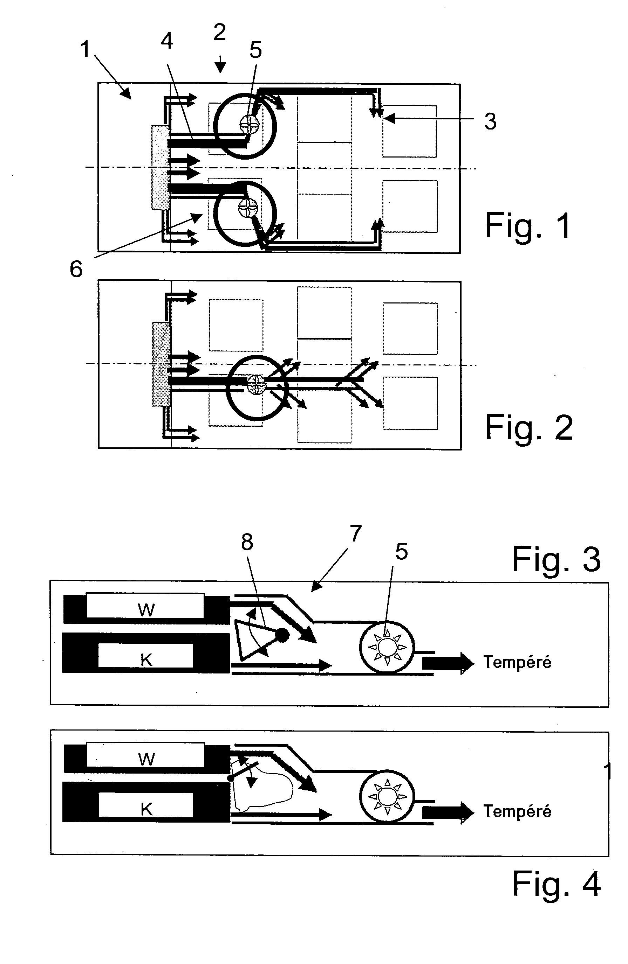

Gemäß dem in Fig. 1 dargestellten Ausführungsbeispiel ist lediglich ein Klimaanlagen-Gebläse (nicht dargestellt), jedoch in jedem Luftkanalstrang 6, der in den Fondbereich führt, zwei Booster-Gebläse 5 vorgesehen, welche die temperierte Luft schnell in den Fondbereich befördern, so dass die Verweildauer der Luft im Luftkanal-System 2 und im Falle einer durch die Klimaanlage 1 gekühlten Luft der Temperaturanstieg verringert werden kann, wodurch keine zweite Klimaanlage im Fondbereich erforderlich ist.

Die Mischung von kalter und warmer Luft erfolgt vor dem jeweiligen Booster-Gebläse 5. Beispielhaft sind in den Figuren 3 und 4 zwei Mischsysteme 7 dargestellt, bei denen - entsprechend der gewünschten Temperierung - die erforderliche Öffnung des Kaltluftkanals K bzw. des Warmluftkanals W freigegeben, teilweise freigegeben oder geschlossen wird. Hierfür sind entsprechend ausgebildete Klappen 8 vorgesehen.

Gemäß einer Variante, die in Fig. 2 dargestellt ist, ist nur ein Luftkanalstrang 6, der in den Fondbereich führt, und somit nur ein Böoster-Gebläse 5 im Luftkanal-System 2 vorgesehen, um die Strömungsgeschwindigkeit der Luft zu erhöhen und dadurch die Temperaturänderung zu minimieren.

## Patentansprüche

1. Klimaanlage, insbesondere für ein Kraftfahrzeug, mit einem Luftkanal-System (2), das eine Mehrzahl von Luftkanälen (4) aufweist, **dadurch gekennzeichnet, dass** mindestens ein Booster-Gebläse (5) vorgesehen ist.

2. Klimaanlage nach Anspruch 1, **dadurch gekennzeichnet, dass** die Luftkanäle (4) derart ausgebildet sind, dass die Verweildauer der Luft in den Luftkanälen (4) minimiert wird.

3. Klimaanlage nach Anspruch 1 oder 2, **dadurch gekennzeichnet, dass** ein Teil der Luftkanäle (4) oder alle Luftkanäle (4) isolierend ausgebildet oder mit einer Isolierung versehen sind.

4. Klimaanlage nach Anspruch 3, **dadurch gekennzeichnet, dass** Kaltluft führende Luftkanäle (4) isolierend ausgebildet oder mit einer Isolierung versehen sind.

5. Klimaanlage nach Anspruch 3 oder 4, **dadurch gekennzeichnet, dass** temperierte Luft führende Luftkanäle (4) isolierend ausgebildet oder mit einer Isolierung versehen sind.

6. Klimaanlage nach einem der vorhergehenden Ansprüche, **dadurch gekennzeichnet, dass** vor dem Booster-Gebläse (5) ein Mischsystem (7) zur Mischung von kalter und warmer Luft vorgesehen ist.
